# EUROPÄISCHE PATENTSCHRIFT

(11) **EP 2 299 130 B1**
(45) Veröffentlichungstag und Bekanntmachung des Hinweises auf die Patenterteilung: **05.06.2013**
(21) Anmeldenummer: 10008776.6
(22) Anmeldetag: 24.08.2010
(51) Int. Cl.: F16C 29/02, F16C 32/06

(54) **Luftlagereinrichtung**
Pneumatic bearing device
Dispositif de coussin d'air

(30) Priorität: 18.09.2009 DE 102009041801
(43) Veröffentlichungstag der Anmeldung: 23.03.2011
(73) Patentinhaber: FESTO AG & Co. KG, 73734 Esslingen (DE)
(72) Erfinder: Küffer, Lukas, 8887 Mels (CH); Gebhard, Ute, 73734 Esslingen (DE); Pattora, Ronny, 73669 Lichtenwald (DE); Scholz, Arian, 84533 Stammham (DE)
(74) Vertreter: Vogler, Bernd

(56) Entgegenhaltungen:
- EP-A1- 1 975 431
- EP-A2- 0 866 233
- WO-A1-2008/097157
- DE-A1- 19 826 519
- JP-A- 1 210 617
- US-B1- 6 203 202

## Beschreibung

Die Erfindung betrifft eine Luftlagereinrichtung, mit wenigstens einem Lagerkörper, der eine Vielzahl von an einer Lagerfläche des Lagerkörpers ausmündende Ausströmkanäle aufweist, durch die hindurch Druckluft leitbar ist, wobei die Lagerfläche mit einer ihr zugewandten Gegenfläche eines Gegenkörpers, beispielsweise Werkstücks, derart zusammenwirkt, dass zwischen Lagerfläche und Gegenfläche durch die ausströmende Druckluft ein Luftpolster erzeugbar ist, das einen Lagerspalt hervorruft, wodurch die beiden Flächen entsprechend einer Spaltweite des Lagerspaltes mit einem gewissen Abstand zueinander angeordnet sind, wobei die Luftlagereinrichtung eine unabhängig von der das Luftpolster erzeugenden Druckluft arbeitende, wenigstens einen Überwachungssensor zur Überwachung der Spaltweite besitzende Spaltweiten-Überwachungseinrichtung aufweist und die Luftlagereinrichtung mehrere in einer Bewegungsrichtung des Gegenkörpers hintereinander angeordnete.

Lagerkörper mit jeweils wenigstens einem Überwachungssensor aufweist.

Im Allgemeinen werden Luftlager eingesetzt, wenn in Bezug auf die Leichtgängigkeit und die Verschleißanfälligkeit besonders hohe Anforderungen gestellt werden. Luftlager zeichnen sich konzeptbedingt durch Verschleißfreiheit, hohe Tragkraft und besonders ruhiges Laufverhalten aus. Beim Einsatz von Luftlagern wird unter Druck stehende Luft zwischen die relativ zueinander bewegbaren Bauteile gepresst, so dass sich ein Luftpolster bildet, das die Bauteile auf Abstand hält.

Die EP 0 866 233 A2 offenbart eine Vorrichtung zur Funktionsüberwachung und Stillsetzung für eine Luftlager-Schlittenführung. Die Vorrichtung umfasst einen Lagerkörper mit einer Lagerfläche mit kreisrundem Umfang, wobei sich in der Nähe des Zentrums der Lagerfläche vier Luftaustrittsöffnungen befinden. Im Zentrum der Deckfläche des Lagerkörpers, der über einen Luftspalt auf der Grundplatte aufliegt, ist ein Kugelgelenkkörper vorgesehen, über den die Lasten eingeleitet werden, die das Lager aufzunehmen hat. Es ist ein Druckwächter vorgesehen, über den der im Luftspalt herrschende Druck registrierbar ist. Anstelle des Druckwächters lassen sich auch Drucksensoren verwenden.

Aus der DE 199 18 564 A1 ist beispielsweise ein aerostatisches Luftlager bekannt, bei dem an der Lagerfläche eines Lagerkörpers ein Düsenkanal ausmündet, der sich dann in ein Mikrokanalsystem verzweigt, wodurch ein Luftlager mit hoher Tragkraft und Steifigkeit geschaffen wird.

Damit die Lagerung mittels Luftlagern die gewünschte Tragkraft aufbringen kann, ist eine präzise Druckeinstellung notwendig. Auch die Durchflusseinstellung unterliegt hohen Genauigkeitsanforderungen, da der Durchfluss eine Kenngröße für das hervorgerufene Spaltmaß, also den Abstand zwischen den zu lagernden Bauteilen bildet. Ist der momentane Durchfluss zu gering, kann im schlimmsten Fall das Spaltmaß bzw. die Spaltweite so weit reduziert werden, dass sich die normalerweise auf Abstand zueinander gehaltenen Bauteile berühren und Beschädigungen auftreten.

Um diesem Effekt vorzubeugen ist aus der DE 201 18 421 U1 eine Luftlager-Überwachungseinrichtung bekannt, bei der eine Überwachungseinheit vorgesehen ist, die mit einer zur Erfassung von Druck- und/oder Durchflussdaten der zu mindestens einem Luftlager strömenden Druckluft vorgesehenen Überwachungselektronik ausgestattet ist. Dabei werden Druck- und/oder Durchflussdaten als Ist-Überwachungsdaten mittels Durchflusserfassungsmitteln erfasst, um erforderlichenfalls Änderungen bzw. Korrekturen vornehmen bzw. veranlassen zu können. Es ist beispielsweise möglich, dass optische Anzeigemittel vorgesehen sind, die ein einfaches Ablesen der ermittelten Ist-Überwachungsdaten ermöglichen.

Kommt es zu einer Leckage in der Versorgungsleitung an einer Stelle, die in Strömungsrichtung nach dem Abgriffspunkt für die Druck- und/oder Durchflussmussung liegt, besteht die Gefahr, dass trotz einer fehlerfreien Detektion nicht genügend Druckluft für das Luftlager zur Verfügung steht, so dass kein tragfähiges Luftpolster gebildet werden kann. Da die Bewegung des Gegenstandes relativ zum Luftlager nicht unterbrochen wird, kann es dabei zu schweren Beschädigungen an dem Gegenstand kommen, so dass hoher wirtschaftlicher Schaden entsteht. Ist der Gegenstand bzw. das Werkstück beispielsweise als Glasplatte ausgebildet, so besteht die Gefahr, dass die Glasplatte verkratzt und nicht mehr verwendet werden kann.

Aufgabe der Erfindung ist es daher, eine Luftlagereinrichtung der eingangs erwähnten Art zu schaffen, die gegenüber herkömmlichen Luftlagereinrichtungen energieeffizienter und somit kostensparender betrieben werden kann.

Diese Aufgabe wird durch eine Luftlagereinrichtung mit den Merkmalen des unabhängigen Anspruchs 1 gelöst. Weiterbildungen der Erfindung sind in den Unteransprüchen dargestellt.

Die erfindungsgemäße Luftlagereinrichtung zeichnet sich dadurch aus, dass die Spaltweiten-Überwachungseinrichtung eine Steuerungseinheit besitzt, die mit den Überwachungssensoren der verschiedenen Lagerkörper derart gekoppelt ist, dass bei einem mittels den betreffenden Überwachungssensoren detektierten Nichtvorhandensein des Gegenkörpers am betreffenden Lagerkörper, deren Luftzufuhr abgesperrt wird.

Es wird also nicht der Druck und/oder der Durchfluss im Ausströmkanal bzw. in einem zu den Ausströmkanälen führenden Versorgungskanal detektiert, was zu den vorstehend genannten Nachteilen führen kann, sondern es wird vor Ort am Lagerkörper überwacht. Die Überwachung ist unabhängig von der das Luftpolster erzeugenden Druckluft. Mit der Spaltweite wird also der Parameter überwacht, der direkt für einen zuverlässigen, also reibungsfreien Transport des Gegenstandes bzw. Werkstücks verantwortlich ist.

In besonders bevorzugter Weise ist der Überwachungssensor mit zur Spaltweiten-Überwachungseinrichtung gehörenden Auswertemitteln gekoppelt, in denen eine gewünschte Mindest-Spaltweite hinterlegt ist, die mit einer vom Überwachungssensor detektierten Ist-Spaltweite verglichen wird, wobei bei Unterschreitung der Mindest-Spaltweite ein Fehlersignal ausgegeben wird. Prinzipiell ist auch denkbar, dass der Überwachungssensor den Ist-Wert der Spaltweite misst, wobei der Ist-Wert über geeignete Anzeigemittel, beispielsweise in Form eines Displays, angezeigt werden kann.

Besonders bevorzugt sind die Auswertemittel in den Überwachungssensor integriert. Es ist also möglich, dass der Überwachungssensor mit der Mindest-Spaltweite "geteacht" wird und dann die Auswertemittel an Bord des Überwachungssensors eine Auswertung vornehmen, die letztendlich bei Unterschreitung der Mindest-Spaltweite ein vom Überwachungssensor ausgegebenes Fehlersignal generiert.

Alternativ ist es jedoch auch möglich, dass externe Auswertemittel vorgesehen sind, wobei der Überwachungssensor dann ein Ist-Spaltweitensignal an diese externen Auswertemittel ausgibt, die dann wiederum eine Auswertung vornehmen und bei Unterschreitung der Mindest-Spaltweite ein Fehlersignal ausgeben.

In besonders bevorzugter Weise ist der wenigstens eine Überwachungssensor in den Lagerkörper integriert. Zweckmäßigerweise ist hierzu am Lagerkörper eine Sensoraufnahme ausgebildet, in der der Überwachungssensor lösbar aufgenommen ist.

Bei einer Weiterbildung der Erfindung sind Lagerkörper mit Lagerfläche ortsfest angeordnet, während der Gegenkörper relativ zur Lagerfläche beweglich ist. Der Gegenkörper kann beispielsweise durch eine Fördereinrichtung, beispielsweise Greifer, insbesondere Sauggreifer, relativ zum Lagerkörper bewegt werden.

Bei einer Weiterbildung der Erfindung sind wenigstens zwei in einer Bewegungsrichtung der Gegenfläche hintereinander angeordnete Überwachungssensoren vorgesehen, von denen wenigstens ein Überwachungssensor im Bereich des in Bewegungsrichtung vorderen Endes und wenigstens ein Überwachungssensor im Bereich des in Bewegungsrichtung hinteren Endes des Lagerkörpers angeordnet ist. Dadurch ist es möglich, die Position des Gegenkörpers relativ zum Lagerkörper zu ermitteln. Diejenigen Überwachungssensoren, die kein von einem Fehlersignal unterscheidbares "Gut"-Signal ermitteln, werden also von der Gegenfläche des Gegenkörpers aktuell nicht überfahren. Durch die Verschaltung der verschiedenen Überwachungssensoren mit den Auswertemitteln kann eine Abfragelogik geschaffen werden, um beispielsweise bei Signalgenerierung eines bestimmten Überwachungssensors ein nachgelagerten Bearbeitungsschritt des Gegenkörpers zu starten oder ein vorgelagerten Bearbeitungsschritt zu beenden.

Die Luftlagereinrichtung weist mehrere in einer Bewegungsrichtung des Gegenkörpers hintereinander angeordnete Lagerkörper mit jeweils wenigstens einem Überwachungssensor auf, wobei die Spaltweiten-Überwachungseinrichtung eine Steuerungseinheit besitzt, die mit den Überwachungssensoren der verschiedenen Lagerkörper derart gekoppelt ist, dass bei einem mittels den betreffenden Überwachungssensoren detektierten Nichtvorhandensein des Gegenkörpers am betreffenden Lagerkörper deren Luftzufuhr abgesperrt wird. Mit einer derartigen Anordnung von Lagerkörpern und Überwachungssensoren ist ein sogenanntes "Energy Monitoring" bzw. "Energy Saving" möglich, wodurch die Luftzufuhr derjenigen Lagerkörper abgeschaltet wird, an denen sich der Gegenkörper aktuell nicht befindet, wodurch der Druckluftverbrauch verringert wird. Dies spart Energie und Kosten.

Bei einer Weiterbildung der Erfindung weist der wenigstens eine Überwachungssensor eine Ausströmdüse auf, an die ein von den Ausströmkanälen des Luftpolsters separater Druckluft-Versorgungskanal angeschlossen ist, wobei durch die Ausströmdüse ein auf die Gegenfläche des Gegenkörpers gerichteter Druckluft-Messstrahl austritt und wobei auf Grund des in Abhängigkeit der Spaltweite sich ändernden Volumenstroms des Druckluft-Messstrahls eine Überwachung der tatsächlichen Spaltweite stattfindet.

Besonders bevorzugt ist in den Versorgungskanal eine Ejektoreinrichtung eingeschaltet, die beim Hindurchströmen der Druckluft ein Differenzdruck erzeugt, der mittels eines mit den Auswertemitteln gekoppelten Drucksensors, insbesondere Differenzdrucksensor, erfassbar ist. Alternativ wäre es möglich, den Durchfluss im Versorgungskanal mittels eines Durchflusssenors zu erfassen.

Alternativ ist es auch möglich, dass der Überwachungssensor als optischer oder magnetischer Sensor ausgebildet ist.

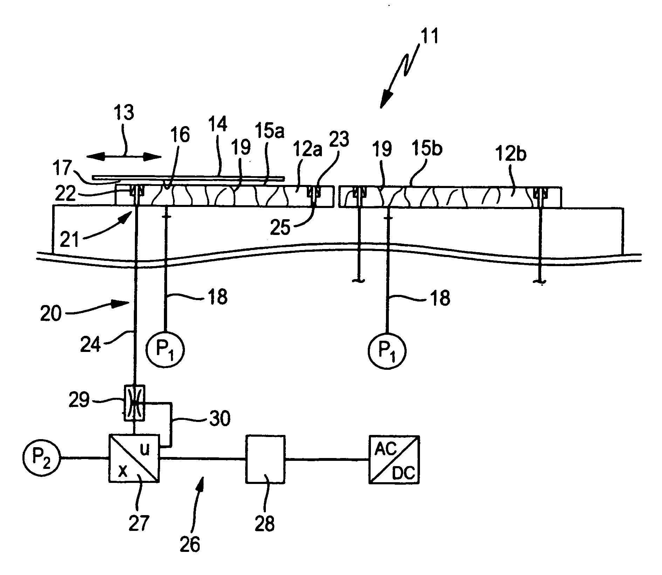

Ein bevorzugtes Ausführungsbeispiel der Erfindung ist in der Zeichnung dargestellt und wird im Folgenden näher erläutert. Die einzige Figur in der Zeichnung zeigt:
Eine schematische Längsschnittdarstellung eines bevorzugten Ausführungsbeispiels der Luftlagereinrichtung.

Die einzige Figur zeigt ein bevorzugtes Ausführungsbeispiel der erfindungsgemäßen Luftlagereinrichtung 11. Die Luftlagereinrichtung 11 verfügt über wenigstens einen Lagerkörper 12, beispielsweise gemäß dem bevorzugten Ausführungsbeispiel über zwei in einer Bewegungsrichtung 13 eines Gegenkörpers 14 hintereinander angeordnete Lagerkörper 12a, 12b. Die beiden Lagerkörper 12a, 12b sind gemäß dem bevorzugten Ausführungsbeispiel stationär ausgeführt, während der Gegenkörper 14 relativ zu den Lagerkörpern 12a, 12b beweglich ist. Die Bewegungsrichtung kann dabei in die durch Doppelpfeil dargestellten zwei entgegengesetzten Bewegungsrichtungen erfolgen. Die Bewegung ist vorliegend eine translatorische Bewegung, beispielsweise eine Linearbewegung. Denkbar wäre aber auch eine Bauform, bei der der Gegenkörper 14 relativ zu wenigstens einem der Lagerkörper 12a, 12b verdrehbar oder verschwenkbar ist.

Die beiden Lagerkörper 12a, 12b besitzen jeweils oberseitig eine Lagerfläche 15a, 15b, die einer Gegenfläche 16 insbesondere an der Unterseite des Gegenkörpers 14 zugewandt sind und zwischen denen ein Luftpolster erzeugt werden kann, das einen Lagerspalt 17 hervorruft, so dass eine der beiden Lagerflächen 15a, 15b und die aktuell zugeordnete Gegenfläche 16 entsprechend der Spaltweite mit einem gewissen Abstand zueinander angeordnet sind.

Auf Grund des erzeugten Luftpolsters kann der Gegenkörper, bei dem es sich um ein Werkstück, beispielsweise eine Glas-oder Metallplatte, handeln kann, verschleißfrei und ohne Abrieb relativ zum Lagerkörper 12a, 12b bewegt werden. Die Luftlagereinrichtung 11 kann daher auch an solchen Orten eingesetzt werden, wo hohe Anforderungen an die Luftreinhaltung bestehen.

Die zur Erzeugung des Luftpolsters im Lagerspalt 17 erforderliche Druckluft wird von einer Druckluftquelle P1 bereitgestellt. Wie in der Figur gezeigt, steht die Druckluft über mindestens einen Einspeisekanal 18 mit den Lagerkörpern 12a, 12b in Verbindung, wobei gemäß bevorzugtem Ausführungsbeispiel jedem Lagerkörper 12a, 12b ein einzelner Einspeisekanal 18 zugeordnet ist.

Die Lagerkörper 12a, 12b bestehen jeweils aus porösem Material, beispielsweise Keramikmaterial, das luftdurchlässig ist, wobei im Lagerkörper 12a, 12b auf Grund der Porösität von den Zwischenräumen eine Vielzahl von Ausströmkanälen 19 gebildet werden, die an der Lagerfläche 15a, 15b des betreffenden Lagerkörpers 12a, 12b ausmünden. Durch die Vielzahl an Ausströmkanälen 19 wird also eine Art Mikrokanalsystem gebildet, das gewährleistet, dass Druckluft im Wesentlichen gleichmäßig über die Lagerfläche 15a, 15b des betreffenden Lagerkörpers 12a, 12b austritt und somit ein großflächiges und gleichmäßiges Luftpolster bildet.

Die Luftlagereinrichtung 11 besitzt ferner eine Spaltweiten-Überwachungseinrichtung 20, die unabhängig von der das Luftpolster erzeugenden Druckluft arbeitet und mit der sich die Spaltweite zwischen der Lagerfläche 15a, 15b und der Gegenfläche 16 am Gegenkörper 14 überwachen lässt. Die Spaltweiten-Überwachungseinrichtung 20 besitzt wenigstens einen Überwachungssensor 21. Der Überwachungssensor 21 ist gemäß bevorzugtem Ausführungsbeispiel als Luftspaltsensor ausgebildet, wobei eine Ausströmdüse 22 vorgesehen ist, die in eine sensoraufnahme 23 am Lagerkörper 12a, 12b aufgenommen ist. Aus der Ausströmdüse 22 tritt ein auf die Gegenfläche 16 des Gegenkörpers 14 gerichteter Druckluft-Messstrahl aus, wobei auf Grund des in Abhängigkeit der Spaltweite sich ändernden Volumenstroms des Druckluft-Messstrahls eine Überwachung der tatsächlichen Spaltweite stattfindet. Die Ausströmdüse ist an einen Durchströmkanal 25 angeschlossen, der durch den Lagerkörper 12a, 12b hindurchgeführt ist. Dieser Durchströmkanal 25 ist an einen Druckluft-Versorgungskanal 24 angeschlossen, der wiederum über eine zweite Druckluftquelle P2 mit Druckluft versorgt wird, wobei die zweite Druckluftquelle separat von der zum Aufbau des Luftpolsters benötigten ersten Druckluftquelle P1 ist. Der durch den Lagerkörper 12a, 12b hindurchragende Durchströmkanal 25 ist ebenfalls separat von den Ausströmkanälen ausgebildet.

Der Überwachungssensor 21 ist ferner mit Auswertemitteln 26 gekoppelt, in denen eine gewünschte Mindest-Spaltweite hinterlegbar ist, die mit einer vom Überwachungssensor 21 detektierten Ist-Spaltweite vergleichbar ist, wobei bei Unterschreitung der Mindest-Spaltweite ein Fehlersignal ausgebbar ist. Das Fehlersignal kann visualisiert werden, beispielsweise auf einem Display oder anderen geeigneten Anzeigemitteln, wie LED o. dgl., um zu erkennen zu geben, dass die erforderliche Mindest-Spaltweite unterschritten ist. Alternativ oder zusätzlich ist auch eine akustische Signalabgabe denkbar.

Zweckmäßigerweise sind die Auswertemittel 26 in den Überwachungssensor 21 integriert, so dass durch sogenanntes "Teachen" des Überwachungssensors 21 eine gewünschte Mindest-Schaltschwelle hinterlegbar ist. In diesem Fall ist es möglich einen pneumatisch/elektrischen Wandler 27 in den Überwachungssensor 21 zu integrieren, so dass vom Überwachungssensor Fehlersignale in Form von Spannungssignalen ausgebbar sind.

Zu den Auswertemitteln 26 gehört ferner noch eine übergeordnete Steuerungseinheit 28, die mit dem pneumatisch/elektrischen Wandler gekoppelt ist und beispielsweise im Falle eines eingehenden Fehlersignals die Bewegung des Gegenkörpers sofort durch Übermittlung eines entsprechenden Stoppsignals an die Fördereinrichtung, beispielsweise Greifer, stoppt.

Mittels der Steuerungseinheit lassen sich auch die nachstehenden erläuterten Zusatzfunktionen verwirklichen.

Der als Luftspaltsensor ausgebildete Überwachungssensor besitzt ferner eine Ejektoreinrichtung 29, insbesondere auf der Basis einer Venturidüse, die beim Hindurch strömen der Druckluft einen Differenzdruck erzeugt, der über einen Abgriffskanal 30 dem pneumatisch/elektrischen Wandler 27 zugeleitet wird. Der abgegriffene Differenzdruck hängt von der Spaltweite zwischen der Gegenfläche 16 und der Lagerfläche 15a, 15b ab.

Der zu transportierende Gegenstand, beispielsweise in Form einer Metall- oder Glasplatte, wird mittels einer Fördereinrichtung, beispielsweise Sauggreifer, in Bewegungsrichtung 13 befördert, wobei das zwischen der Lagerfläche 15a, 15b des Lagerkörpers 12a, 12b und der Gegenfläche 16 des Gegenkörpers 14 ausgebildete Luftpolster einen verschleiß- und abriebfreien Transport des Gegenstandes gewährleistet. Wird die Mindest-Spaltweite unterschritten, beispielsweise durch Leckage im Einspeisekanal 18 oder Ausfall der ersten Druckluftquelle, wird durch den Überwachungssensor ein Fehlersignal an die Steuerungseinheit ausgegeben, die ein Stoppsignal an die Fördereinrichtung ausgibt worauf, die Bewegung des Gegenstandes gestoppt wird.

Wie beispielhaft in der Figur dargestellt, sind an den Lagerkörpern 15a, 15b jeweils zwei Überwachungssensoren 21 angeordnet, von denen ein erster Überwachungssensor in der nach rechts gerichteten Bewegungsrichtung im Bereich des vorderen Endes des Lagerkörpers 15a, 15b und ein zweiter Überwachungssensor dementsprechend im Bereich des hinteren Endes des Lagerkörpers 15a, 15b angeordnet ist. Durch eine derartige Anordnung wird eine Abfragelogik geschaffen, in der Art, dass beispielsweise beim Überfahren des hinteren Überwachungssensors ein Startsignal an die Steuereinheit 28 ausgegeben wird, die das Starten eines nachgeordneten Bearbeitungsschrittes veranlasst. Im Falle eines als Glasplatte ausgebildeten Gegenstandes kann beispielsweise beim Überfahren des hinteren Überwachungssensors 21 ein Laserstrahl für die Oberflächenbearbeitung eingeschaltet werden. Der Bearbeitungsschritt kann also gezielt gestartet werden, wodurch ein ständiger Betrieb der diesen Bearbeitungsschritt durchführenden Werkzeuge, beispielsweise Laserstrahl, nicht notwendig ist.

Die Luftlagereinrichtung 11 besitzt ferner zwei in Bewegungsrichtung hintereinander angeordnete Lagerkörper 15a, 15b. In Kombination mit den Überwachungssensoren 21 und der Steuerungseinheit lässt sich dadurch ein Energy Monitoring und Energy Saving System verwirklichen. Wird durch keinen der Überwachungssensoren eines Lagerkörpers 15a, 15b ein vom Fehlersignal zu unterscheidendes "Gut"-Signal ausgegeben, ist dies ein Zeichen dafür, dass dieser Lagerkörper 15a, 15b aktuell nicht vom Gegenstand überfahren wird. In diesem Fall kann von der Steuerungseinheit 28 ein Abschaltsignal ausgegeben werden, dass ein Abschalten der Druckluftzufuhr zum betreffenden Lagerkörper veranlasst. Dadurch wird der Druckluftverbrauch und somit der Energieaufwand reduziert. Auch eine Kombination mit der Abfragelogik ist denkbar, in der Art, dass beim Überfahren des hinteren Überwachungssensors 21 am in Bewegungsrichtung vorgeordneten Lagerkörper 12a, 12b die Druckluftzufuhr des nachgeordneten Lagerkörpers 12a, 12b gestartet wird.

## Patentansprüche

1. Luftlagereinrichtung, mit wenigstens einem Lagerkörper (12a, 12b), der eine Vielzahl von an einer Lagerfläche (15a, 15b) des Lagerkörpers (12a, 12b) ausmündende Ausströmkanäle (19) aufweist, durch die hindurch Druckluft leitbar ist, wobei die Lagerfläche (15a, 15b) mit einer ihr zugewandten Gegenfläche (16) eines Gegenkörpers (14), beispielsweise Werkstücks, derart zusammenwirkt, dass zwischen Lagerfläche (15a, 15b) und Gegenfläche (16) durch die ausströmende Druckluft ein Luftpolster erzeugbar ist, das einen Lagerspalt (17) hervorruft, wodurch die beiden Flächen (15a, 15b, 16) entsprechend einer Spaltweite des Lagerspaltes (17) mit einem gewissen Abstand zueinander angeordnet sind, wobei die Luftlagereinrichtung (11) eine unabhängig von der das Luftpolster erzeugenden Druckluft arbeitende, wenigstens einen Überwachungssensor (21) zur Überwachung der Spaltweite besitzende Spaltweiten-Überwachungseinrichtung (20) aufweist, wobei die Luftlagereinrichtung (11) mehrere in einer Bewegungsrichtung (13) des Gegenkörpers (14) hintereinander angeordnete Lagerkörper (12a, 12b) mit jeweils wenigstens einem Überwachungssensor (21) aufweist, **dadurch gekennzeichnet, dass** die Spaltweiten-Überwachungseinrichtung (20) eine Steuerungseinheit (28) besitzt, die mit den Überwachungssensoren (21) der verschiedenen Lagerkörper (12a, 12b) derart gekoppelt ist, dass bei einem mittels den betreffenden Überwachungssensoren (21) detektierten Nichtvorhandensein des Gegenkörpers am betreffenden Lagerkörper (12a, 12b), deren Luftzufuhr abgesperrt wird.

2. Luftlagereinrichtung nach Anspruch 1, **dadurch gekennzeichnet, dass** der Überwachungssensor (21) mit zur Spaltweiten-Überwachungseinrichtung (20) gehörenden Auswertemitteln (26) gekoppelt ist, in denen eine gewünschte Mindest-Spaltweite hinterlegt ist, die mit einer vom Überwachungssensor (21) detektierten Ist-Spaltweite verglichen wird, wobei bei Unterschreitung der Mindest-Spaltweite ein Fehlersignal ausgebbar ist.

3. Luftlagereinrichtung nach Anspruch 2, **dadurch gekennzeichnet, dass** die Auswertemittel (26) in den Überwachungssensor (21) integriert sind.

4. Luftlagereinrichtung nach Anspruch 2, **dadurch gekennzeichnet, dass** externe Auswertemittel (26) vorgesehen sind und der Überwachungssensor (21) ein Ist-Spaltweitensignal an die Auswertemittel (26) ausgibt.

5. Luftlagereinrichtung nach einem der vorhergehenden Ansprüche, **dadurch gekennzeichnet, dass** der wenigstens eine Überwachungssensor (21) in den Lagerkörper (12a, 12b) integriert ist.

6. Luftlagereinrichtung nach einem der vorhergehenden Ansprüche, **dadurch gekennzeichnet, dass** Lagerkörper (12a, 12b) und Lagerfläche (15a, 15b) ortsfest angeordnet sind während der Gegenkörper (14) relativ zur Lagerfläche (15a, 15b) beweglich ist.

7. Luftlagereinrichtung nach einem der vorhergehenden Ansprüche, **dadurch gekennzeichnet, dass** wenigstens zwei in einer Bewegungsrichtung des Gegenkörpers (14) hintereinander angeordnete Überwachungssensoren (21) vorgesehen sind, von denen wenigstens ein Überwachungssensor (21) im Bereich des in Bewegungsrichtung (13) vorderen Endes und wenigstens ein Überwachungssensor (21) im Bereich des in Bewegungsrichtung hinteren Endes des Lagerkörpers (12a, 12b) angeordnet ist.

8. Luftlagereinrichtung nach einem der vorhergehenden Ansprüche, **dadurch gekennzeichnet, dass** der wenigstens eine Überwachungssensor (21) eine Ausströmdüse (22) aufweist, an die ein von den Ausströmkanälen (19) separater Druckluft-Versorgungskanal (24) angeschlossen ist, wobei durch die Ausströmdüse (22) ein auf die Gegenfläche (16) des Gegenkörpers (14) gerichteter Druckluft-Messstrahl austritt und wobei aufgrund des in Abhängigkeit der Spaltweite sich ändernden Volumenstroms des Druckluft-Messstrahls eine Überwachung der tatsächlichen Spaltweite stattfindet.

9. Luftlagereinrichtung nach einem der vorhergehenden Ansprüche, **dadurch gekennzeichnet, dass** in den Versorgungskanal (24) eine Ejektoreinrichtung (29) eingeschaltet ist, die beim Hindurchströmen der Druckluft einen Differenzdruck erzeugt, der mittels einem mit den Auswertemitteln (26) gekoppelten Drucksensor erfassbar ist.

## Claims

1. Air bearing device with at least one bearing body (12a, 12b) which has a multiplicity of discharge passages (19) opening out at a bearing surface (15a, 15b) of the bearing body (12a, 12b) and through which compressed air may be fed, wherein the bearing surface (15a, 15b) cooperates with a facing mating surface (16) of a mating body (14), for example a workpiece, in such a way that between the bearing surface (15a, 15b) and the mating surface (16) the outflowing compressed air is able to generate an air cushion which creates a bearing gap (17), by which means the two surfaces (15a, 15b, 16) are arranged at a certain distance from one another corresponding to a gap width of the bearing gap (17), wherein the air bearing device (11) has a gap width monitoring device (20) operating independently of the compressed air generating the air cushion and with at least one monitoring sensor (21) for monitoring the gap width, wherein the air bearing device (11) has several bearing bodies (12a, 12b) arranged consecutively in a direction of movement (13) of the mating body (14), each with at least one monitoring sensor (21), **characterised in that** the gap width monitoring device (20) has a control unit (28) which is so connected to the monitoring sensors (21) of the various bearing bodies (12a, 12b) that, if the relevant monitoring sensors (21) detect the absence of the mating body at the relevant bearing body (12a, 12b), its air supply is shut off.

2. Air bearing device according to claim 1, **characterised in that** the monitoring sensor (21) is connected to evaluation means (26) belonging to the gap width monitoring device (20) and in which is stored a desired minimum gap width which is compared with an actual gap width detected by the monitoring sensor (21), wherein an error signal may be emitted if there is a shortfall in the minimum gap width.

3. Air bearing device according to claim 2, **characterised in that** the evaluation means (26) are integrated into the monitoring sensor (21).

4. Air bearing device according to claim 2, **characterised in that** external evaluation means (26) are provided and the monitoring sensor (21) emits an actual gap width signal to the evaluation means (26).

5. Air bearing device according to any of the preceding claims, **characterised in that** the monitoring sensor or sensors (21) is or are integrated into the bearing body (12a, 12b).

6. Air bearing device according to any of the preceding claims, **characterised in that** bearing bodies (12a, 12b) and bearing surfaces (15a, 15b) are fixed immovably, while the mating body (14) is movable relative to the bearing surface (15a, 15b).

7. Air bearing device according to any of the preceding claims, **characterised in that** at least two monitoring sensors (21) arranged consecutively in a direction of movement of the mating body (14) are provided, of which at least one monitoring sensor (21) is located in the area of the front end in the direction of movement (13), and at least one monitoring sensor (21) is located in the area of the rear end in the direction of movement of the bearing body (12a, 12b).

8. Air bearing device according to any of the preceding claims, **characterised in that** the monitoring sensor or sensors (21) has or have a discharge nozzle (22) to which is connected a compressed air feed passage (24) separate from the discharge passages (19), wherein a compressed air measuring jet directed on to the mating surface (16) of the mating body (14) passes through the discharge nozzle (22) and wherein monitoring of the actual gap width takes place based on the changing volumetric flow of the compressed air measuring jet depending on the gap width.

9. Air bearing device according to any of the preceding claims, **characterised in that** the feed passage (24) includes an ejector device (29) which, as the compressed air flows through, generates a differential pressure which may be detected by means of a pressure sensor connected to the evaluation means (26).

## Revendications

1. Dispositif de coussin d'air, comprenant au moins un corps de palier (12a, 12b), qui présente une pluralité de conduits d'évacuation (19) débouchant au niveau d'une surface de palier (15a, 15b) du corps de palier (12a, 12b), par lesquels il est possible d'acheminer de l'air comprimé, sachant que la surface de palier (15a, 15b) coopère avec une surface complémentaire (16), tournée vers ladite surface de palier, d'un corps complémentaire (14), par exemple d'une pièce à usiner, de telle manière qu'il est possible de produire entre la surface de palier (15a, 15b) et la surface complémentaire (16) par l'air comprimé devant être évacué un coussin d'air, qui entraîne une fente de palier (17), ce qui permet de disposer les deux surfaces (15a, 15b, 16), de manière à correspondre à une largeur de fente de la fente de palier (17), à une certaine distance l'une de l'autre, sachant que le dispositif de coussin d'air (11) présente un dispositif de surveillance (20) de la largeur de fente qui fonctionne indépendamment de l'air comprimé générant le coussin d'air, et qui comprend au moins un capteur de surveillance (21) servant à surveiller la largeur de fente, sachant que le dispositif de coussin d'air (11) présente plusieurs corps de palier (12a, 12b) dotés respectivement d'au moins un capteur de surveillance (21), disposés les uns derrière les autres dans une direction de déplacement (13) du corps complémentaire (14), **caractérisé en ce que** le dispositif de surveillance (20) de la largeur de fente comprend une unité de commande (28), qui est couplée aux capteurs de surveillance (21) des divers corps de palier (12a, 12b) de telle manière qu'en l'absence détectée au moyen des capteurs de surveillance (21) concernés du corps complémentaire au niveau du corps de palier (12a, 12b) correspondant, l'amenée d'air est bloquée.

2. Dispositif de coussin d'air selon la revendication 1, **caractérisé en ce que** le capteur de surveillance (21) est couplé à des moyens d'évaluation appartenant dispositif de surveillance (20) des largeurs de fente, lesquels moyens d'évaluation mémorisent une largeur minimale de fente souhaitée, qui est comparée à une largeur de fente réelle détectée par le capteur de surveillance (21), sachant qu'en cas de dépassement de la largeur minimale de fente, un signal d'anomalie peut être émis.

3. Dispositif de coussin d'air selon la revendication 2, **caractérisé en ce que** les moyens d'évaluation (26) sont intégrés dans le capteur de surveillance (21).

4. Dispositif de coussin d'air selon la revendication 2, **caractérisé en ce que** des moyens d'évaluation (26) externes sont prévus, et **en ce que** le capteur de surveillance (21) émet un signal relatif à la largeur réelle de la fente et l'envoie aux moyens d'évaluation (26).

5. Dispositif de coussin d'air selon l'une quelconque des revendications précédentes, **caractérisé en ce que** le capteur de surveillance (21) au moins au nombre de un est intégré dans le corps de palier (12a, 12b).

6. Dispositif de coussin d'air selon l'une quelconque des revendications précédentes, **caractérisé en ce que** les corps de palier (12a, 12b) et la surface de palier (15a, 15b) sont disposés de manière immobile, tandis que le corps complémentaire (14) peut être déplacé par rapport à la surface de palier (15a, 15b).

7. Dispositif de coussin d'air selon l'une quelconque des revendications précédentes, **caractérisé en ce que** sont prévus au moins deux capteurs de surveillance (21) disposés les uns derrière les autres dans une direction de déplacement du corps complémentaire (14), parmi lesquels au moins un capteur de surveillance (21) est disposé dans la zone de l'extrémité avant dans le sens de déplacement (13) et au moins un capteur de surveillance (21) est disposé dans la zone de l'extrémité arrière, vue dans le sens de déplacement, du corps de palier (12a, 12b).

8. Dispositif de coussin d'air selon l'une quelconque des revendications précédentes, **caractérisé en ce que** le capteur de surveillance (21) au moins au nombre de un présente une buse d'évacuation (22), à laquelle est raccordé un conduit d'alimentation en air comprimé (24) séparé des conduits d'évacuation (19), sachant qu'un jet de mesure d'air comprimé, orienté sur la surface complémentaire (16) du corps complémentaire (14) sort par la buse d'évacuation (22) et sachant que du fait de la variation du débit volumique du jet de mesure d'air comprimé selon la largeur de la fente, la largeur réelle de la fente est surveillée.

9. Dispositif de coussin d'air selon l'une quelconque des revendications précédentes, **caractérisé en ce qu'**est installé dans le conduit d'alimentation (24) un dispositif éjecteur (29), qui génère lors du passage de l'air comprimé une pression différentielle, qui peut être détectée au moyen d'un capteur de pression couplé aux moyens d'évaluation (26).
